# EUROPEAN PATENT SPECIFICATION

(11) **EP 2 090 971 B1**
(45) Date of publication and mention of the grant of the patent: **27.06.2012**
(21) Application number: 08151395.4
(22) Date of filing: 13.02.2008
(51) Int. Cl.: G06F 3/048

(54) **Three-dimensional touch-sensitive display device**
Dreidimensionale berührungsempfindliche Anzeigevorrichtung
Dispositif d'affichage tridimensionnel tactile

(43) Date of publication of application: 19.08.2009
(73) Proprietor: Research In Motion Limited, Waterloo, ON N2L 3W8 (CA)
(72) Inventor: Griffin, Jason, Kitchener, Ontario N2P 2L3 (CA); Fyke, Steven Henry, Waterloo, Ontario N2L 6M1 (CA)
(74) Representative: Patel, Binesh

(56) References cited:
- EP-A- 1 548 544
- WO-A1-00/57266
- US-A1- 2003 081 016
- US-A1- 2003 235 452
- US-A1- 2006 265 648
- US-A1- 2007 152 975
- US-A1- 2007 279 391
- US-B1- 6 259 044

## Description

### FIELD

This disclosure relates to a touch-sensitive display device. In particular, this disclosure relates to a three-dimensional touch-sensitive display device for a portable electronics device.

### BACKGROUND

Many portable communications devices, such as wireless telephones, personal data assistants, and wireless pagers, include a liquid crystal display (LCD) panel that displays information to the operator of the device, and a physical keyboard for entering commands and/or data into the device. Some portable communications devices have a touch-sensitive screen instead of a separate LCD panel and keyboard. To facilitate entry of data/commands, the device may depict on the touch-sensitive screen a virtual keyboard that comprises a plurality of virtual touch-sensitive keys. Unlike a physical keyboard, however, virtual keyboards do not provide any tactile feedback to the user. As a result, control of the device is often difficult in extremely bright or dim ambient light.

Selig (US 6,492,978) describes a keyscreen that may be disposed on a LCD or CRT display. The keyscreen comprises a planar touch-screen, and a physical keypad that is disposed over the touch-screen. Computer software, together with the touch-screen and the monitor, defines a virtual keypad over a portion of the display. The physical keypad is fastened to the touch-screen, and comprises a plurality of articulating or flexible opaque or transparent keys that engage a respective portion of the virtual keypad and provide tactile feedback to the user.

Crandall (US 2004/090428) describes an overlay for a touch-sensitive screen. In one embodiment, the overlay comprises a grid of raised portions that are arranged to correspond to the touch-sensitive areas of the screen. In another embodiment, the overlay includes a grid of die-cut holes that are arranged to correspond to the touch-sensitive areas of the screen.

Maw (US 2006/033723) describes a telephone keypad that comprises a touchpad having a perimeter region and a centre region. The centre region comprises a 3x3 matrix of virtual keys, and the perimeter region comprises a ring of virtual keys disposed around the 3x3 key matrix. In one embodiment, the keypad is configured as a touch-screen, and displays the state of the keypad on the touch-screen. In another embodiment, each virtual key of the 3x3 matrix is dome-shaped to provide extra assurance of contacting the appropriate key.
[0005a] WO 00/057266 relates to a computer input device formed from a touch-sensitive screen and flexible membrane over the screen. The flexible membrane is marked to indicate touch input locations.

### SUMMARY

By way of overview, in a first aspect this disclosure relates to a touch-sensitive display device as set forth in claim 1.

In a second aspect, this disclosure relates to a portable electronics device that comprises a data processor and a display as set forth in claim 7.
In a third aspect, this disclosure relates to a method of detecting input from a touch-sensitive display as set forth in claim 10.BRIEF DESCRIPTION OF THE DRAWINGS

Fig. 1 is a front plan view of a portable electronics device;
Fig. 2 is a schematic diagram depicting certain functional details of the portable electronics device, including the display and the data processing system;
Fig. 3 is a transverse cross-section view of the display, taken along the line 3-3 of Fig. 6;
Fig. 4 depicts a date selection screen when rendered on the display;
Fig. 5 depicts a text entry screen when rendered on the display;
Fig. 6 is a top plan view of the display device, depicting a sample mask for use with the date selection and text entry screens;
Fig. 7 is a transverse cross-sectional view of the display, taken along the line 7-7 of Fig. 6; and
Fig. 8 is a flowchart that depicts the method of operation of the display and the data processing system.

### DETAILED DESCRIPTION

### Communications Device 200

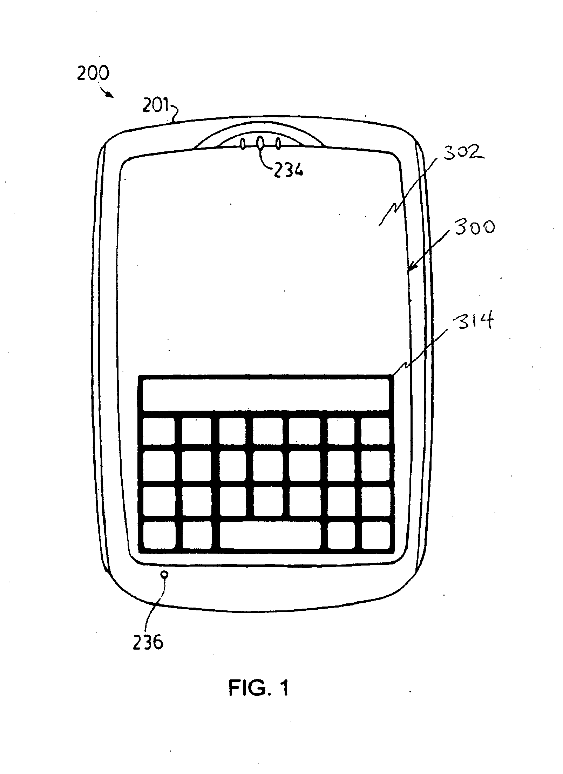

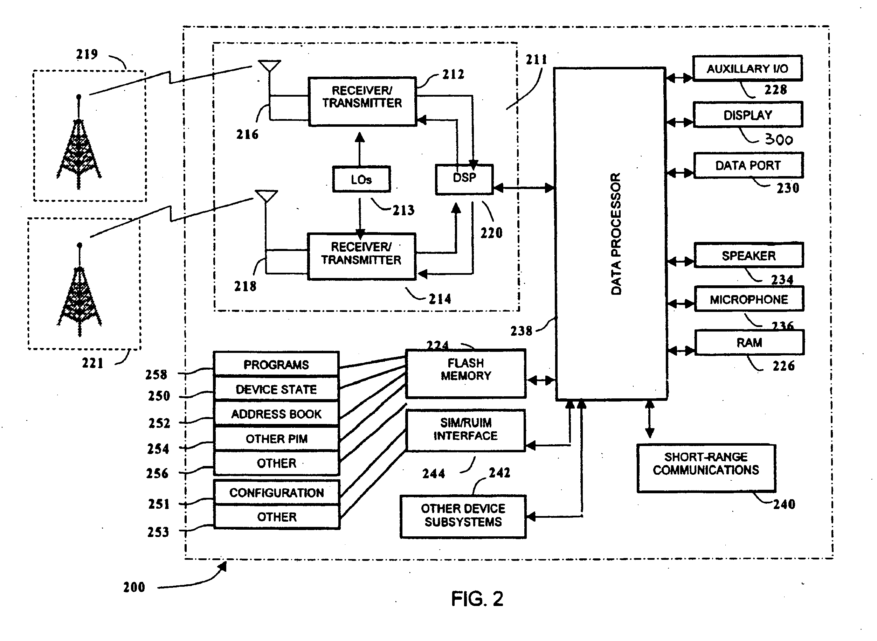

Turning now to Figs. 1 and 2, there is shown a sample handheld communications device 200. Preferably, the handheld communications device 200 is a two-way wireless communications device having at least voice and data communication capabilities, and is configured to operate within a wireless network. Depending on the exact functionality provided, the wireless handheld communications device 200 may be referred to as a data messaging device, a two-way pager, a wireless e-mail device, a cellular telephone with data messaging capabilities, a wireless Internet appliance, or a data communication device, as examples.

The handheld communications device 200 includes a data processing system (not shown), a communication subsystem 211, a display 300, and various other device subsystems and electronics circuits all disposed within a common housing 201. The data processing system, and the display 300 will be discussed in greater detail below. At this point, however, it is sufficient to point out that the data processing system is in communication with the various device subsystems, including the display 300, and controls the overall operation of the communications device 200.

### Communications Subsystem 211

Fig. 2 depicts functional details of the handheld communications device 200. The handheld communications device 200 incorporates a motherboard that includes various device subsystems, such as the communication subsystem 211 and the data processing system. The communication subsystem 211 performs communication functions, such as data and voice communications, and includes a primary transmitter/receiver 212, a secondary transmitter/receiver 214, a primary internal antenna 216 for the primary transmitter/receiver 212, a secondary internal antenna 218 for the secondary transmitter/receiver 214, one or more local oscillators (LOs) 213 and one or more digital signal processors (DSP) 220 coupled to the transmitter/receivers 212, 214.

Typically, the communication subsystem 211 sends and receives wireless communication signals over a wireless cellular network 219 via the primary transmitter/receiver 212 and the primary internal antenna 216. Further, typically the communication subsystem 211 sends and receives wireless communication signals over a wireless local area network 221 via the secondary transmitter/receiver 214 and the secondary internal antenna 218.

The primary internal antenna 216 can be configured for use within a Global System for Mobile Communications (GSM) cellular network or a Code Division Multiple Access (CDMA) cellular network. Further, the secondary internal antenna 218 can be configured for use within a WLAN WiFi (IEEE 802.11x) or Bluetooth network. Although the handheld communications device 200 is depicted in Fig. 2 with two antennas, it should be understood that the handheld communications device 200 may instead comprise only a single antenna, with a dual-band antenna being connected to both the primary transmitter/receiver 212 and the secondary transmitter/receiver 214.

Signals received by the primary internal antenna 216 from the wireless cellular network 219 are input to the receiver section of the primary transmitter/receiver 212, which performs common receiver functions such as frequency down conversion, and analog to digital (A/D) conversion, in preparation for more complex communication functions performed by the DSP 220. Signals to be transmitted over the wireless cellular network 219 are processed by the DSP 220 and input to transmitter section of the primary transmitter/receiver 212 for digital to analog conversion, frequency up conversion, and transmission over the wireless cellular network via the primary internal antenna 216.

Similarly, signals received by the secondary internal antenna 218 from the wireless local area network 221 are input to the receiver section of the secondary transmitter/receiver 214, which performs common receiver functions such as frequency down conversion, and analog to digital (A/D) conversion, in preparation for more complex communication functions performed by the DSP 220. Signals to be transmitted over the wireless local area network 221 are processed by the DSP 220 and input to transmitter section of the secondary transmitter/receiver 214 for digital to analog conversion, frequency up conversion, and transmission over the wireless local area network via the secondary internal antenna 218.

The communications device 200 also includes a SIM interface 244 if the handheld communications device 200 is configured for use within a GSM network, and/or a RUIM interface 244 if the handheld communications device 200 is configured for use within a CDMA network. The SIM/RUIM interface 244 is similar to a card-slot into which a SIM/RUIM card can be inserted and ejected. The SIM/RUIM card holds many key configurations 251, and other information 253 including subscriber identification information, such as the International Mobile Subscriber Identity (IMSI) that is associated with the handheld communications device 200, and other subscriber-related information.

In data communication mode, a received text message or web page download will be processed by the communication subsystem 211 and output to the display 300, or alternatively to the auxiliary input/output (I/O) subsystem 228. A user of the handheld communications device 200 may compose data items such as email messages for example, using the display 300. Such composed items may then be transmitted over the wireless cellular network 219 or the local area wireless network 221 through the communication subsystem 211.

For voice communications, overall operation of the handheld communications device 200 is similar, except that received signals would preferably be output to the speaker 234 and signals for transmission would be generated by a microphone 236. Further, the display 300 may provide an indication of the identity of a calling party, the duration of a voice call, or other voice call related information for example.

### Display 300

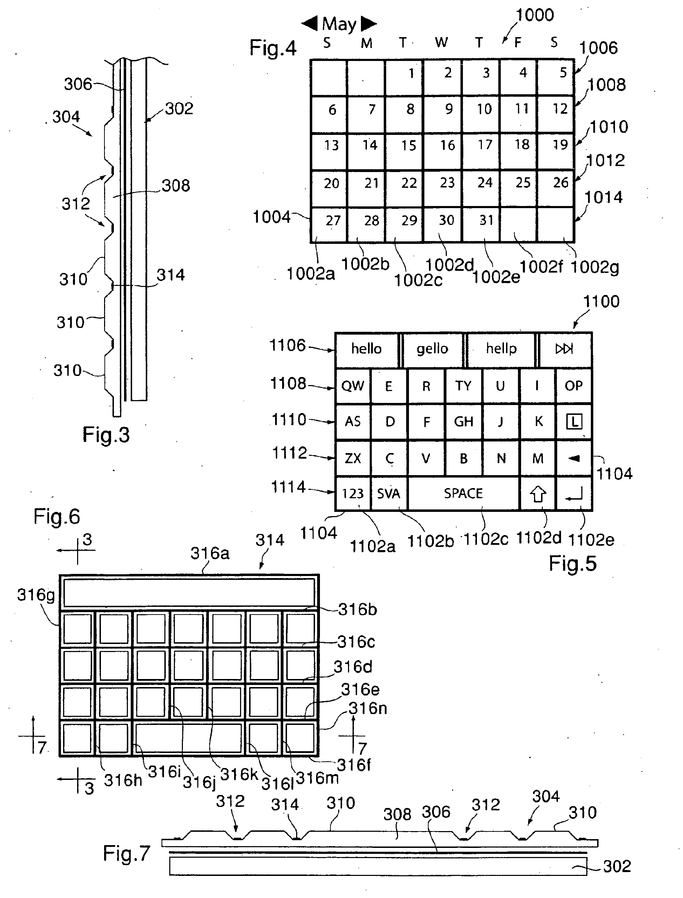

The display 300 is provided as a self-contained three-dimensional touch-sensitive display that is physically mounted, and electrically connected; to the motherboard. As shown in Figs. 3 and 7, the display 300 comprises a display device 302, and a transparent three-dimensional touch-sensitive screen 304 that is disposed over the display device 302. The display device 302 and the touch-sensitive screen 304 are coupled to the data processing system. The data processing system displays information to the user via the display device 302, and receives data/command input from the user via the touch-sensitive screen 304.

Preferably, the display device 302 comprises a planar glass liquid crystal display (LCD) panel, and a printed circuit board (not shown) that carries the display electronics for the display panel. The printed circuit board is coupled to, and controlled by, the data processing system. In addition to the printed circuit board, the display device 302 may include a backlight (not shown), and a light guide (not shown) that is disposed between the backlight and the LCD panel. However, other display devices are encompassed by the display device 302, including reflective and trans-reflective liquid crystal displays, plastic liquid crystal displays (with or without backlight), cathode ray tube (CRT) displays and plasma membrane displays.

The touch-sensitive screen 304 may be disposed over the entire surface of the display device 302, or only a portion thereof, and is secured to the display device 302 through a mounting frame (not shown) that also secures the assembled display 300 to the motherboard. The touch-sensitive screen 304 comprises a planar transparent touch-sensitive panel306, and a three-dimensional transparent lens 308. Preferably, the touch-sensitive panel 306 comprises a capacitive touch-sensitive panel, and is disposed between the transparent lens 308 and the display device 302. Alternately, the touch-sensitive panel may comprise a resistive touch-sensitive panel, with the transparent lens 308 being disposed between the resistive touch-sensitive panel and the display device 302.

As shown in Figs. 3 and 7, the transparent lens 308 comprises a plurality of raised regions 310 and a recessed region 312. The recessed region 312 surrounds the raised regions 310 of the transparent lens 308, such that the raised regions 310 appear as distinct transparent keys.

Preferably, the three-dimensional transparent lens 308 is fabricated from a resilient polymeric material, and is fixed to the touch-sensitive panel 306 via the mounting frame and/or adhesive. Alternately, the three-dimensional transparent lens 308 may be integrally-molded with the touch-sensitive panel 306. The transparent lens 308 will be discussed in further detail below.

### Data Processing System

The data processing system interacts with the device subsystems such as the communication subsystem 211, auxiliary input/output (I/O) subsystem 228, data port 230, speaker 234, microphone 236, short-range communications subsystem 240, device subsystems 242, and the display 300. The data port 230 may comprise a RS-232 port, a Universal Serial Bus (USB) port or other wired data communication port.

The data processing system comprises a microprocessor 238, flash memory 224, and volatile memory (RAM) 226. The flash memory 224 includes both computer program storage 258 and program data storage 250, 252, 254 and 256. Computer processing instructions are preferably also stored in the flash memory 224 or other similar non-volatile storage. The computer processing instructions, when executed by the microprocessor 238 from the flash memory 224, implement computer programs 258, an operating system, and operating system specific applications. Alternately, the computer processing instructions may be copied from the flash memory 224 into the RAM 226 upon system reset or power-up, and executed by the microprocessor 238 out of the RAM 226. The computer processing instructions may be installed onto the handheld communications device 200 upon manufacture, or may be loaded through the wireless networks 219, 221, the auxiliary I/O subsystem 228, the data port 230, the short-range communications subsystem 240, or the device subsystem 242.

Typically, the computer programs 258 include communication software that allows the handheld communications device 200 to receive one or more communication services. For instance, preferably the communication software includes internet browser software, SMS message and e-mail software, telephone software and map software that respectively allow the handheld communications device 200 to communicate with various computer servers over the Internet, send and receive messages/e-mail, initiate and receive telephone calls, and view electronic maps. The computer programs 258 may also include application software, such as calendar software which diarizes due dates and/or appointments of importance to the user, memo software that allows the user to create and edit memos, and/or task management software that tracks of the status of tasks of importance to the user.

The operating system comprises an Open Systems Interconnection (OSI) communication protocol stack that allows the handheld communications device 200 to send and receive communication signals over the wireless cellular network 219 and the local area wireless network 221. The operating system also allows the handheld communications device 200 to operate the auxiliary input/output (I/O) subsystem 228, data port 230, speaker 234, microphone 236, short-range communications subsystem 240, device subsystems 242, and the display 300.

The operating system also comprises display management software that configures the data processor to effect data input/output with the display 300. The display management software is configured with a plurality of data input/output screens, each associated with one of the computer programs 258. Each data input/output screen is designed to facilitate data input to the associated computer program 258 from the touch-sensitive screen 304, and to facilitate data output from the associated computer program 258 to the display device 302. The display management software also causes the data processor to render on the display device 302 the data input/output screen for the computer program 258 that is currently active (i.e. accepting input from the touch-sensitive screen 304).

Each data input/output screen comprises a plurality of distinct data input/output regions. The display management software is configured to detect touch activity at the touch-sensitive screen 304 as touch input, and to determine the data input/output region of the active data input/output screen that is associated with the location of the touch input. Possible forms of touch activity include fingertip or stylus pressure on the touch-sensitive screen 304, where the screen 304 comprises a resistive touch-sensitive panel; and the presence of a fingertip or stylus proximate to the touch-sensitive screen 304, where the screen 304 comprises a capacitive touch-sensitive panel.

Sample data input/output screens are depicted in Figs. 4 and 5. Fig. 4 depicts a data input/output screen 1000 for selecting dates with the calendar software. As shown, the date selection screen 1000 comprises a plurality of contiguous data input/output regions 1002, each associated with a unique date number. For clarity, Fig. 4 only explicitly identifies seven of the data input/output regions 1002 (1002a, 1002b, 1002c, 1002d, 1002e, 1002f, 1002g), although, the date selection screen 1000 includes five rows 1006, 1008, 1010, 1012, 1014 of seven data input regions 1002. The calendar software interprets data input/output region information, received from the display management software, as a date selection, and displays on the display device 302 appointment information associated with each date corresponding with the date selected.

Fig. 5 depicts a sample data input/output screen 1100 for text entry with the e-mail or memo software. As shown, the text entry screen 1100 comprises a plurality of contiguous data input/output regions 1102, each associated with one or more characters (numbers, letters or commands) or words. For clarity, Fig. 5 only explicitly identifies five of the data input/output regions 1102 (1102a, 1102b, 1102c, 1102d, 1102e), although, the text entry screen 1100 includes a first row 1106 of four data input regions 1102, three row 1108, 1110, 1112 of seven data input regions 1102, and a fifth row 1114 of five data input regions 1102. The e-mail/memo software interprets data input/output region information, received from the display management software, as a character selection, and displays on the display device 302 the character associated with the character selected.

Preferably, each data input/output region 1002 is surrounded by grid lines 1004 to allow the operator of the communications device 200 to more easily visually identify the lateral extent of each data input/output region 1002. Similarly, preferably each data input/output region 1102 is surrounded by grid lines 1104 to allow the operator of the communications device 200 to more easily visually identify the lateral extent of each data input/output region 1102. As will be explained, the grid lines 1004, 1104 may be rendered on the display device 302 by the data processing system and/or permanently configured into the display device 302.

The data input/output screens may have one or more data input/output regions in common ("common I/O regions"). For instance, the operator of the communications device 200 selects dates for the calendar software via the touch-sensitive screen 304 and also enters characters into the e-mail/memo software via the touch-sensitive screen 304. As shown, each data input/output region 1002 in the second, third and fourth rows 1008, 1010, 1012 of the date selection screen 1000 depicts at most a two-digit number. Similarly, each data input/region 1102 in the second, third and fourth rows 1108, 1110, 1112 of the text entry screen 1100 depicts at most two characters. With this configuration of data input/output screens, each of the data input regions 1002 in the second, third and fourth rows 1008, 1010, 1012, of the date selection screen 1000 is the same size and occupies the same positions as the corresponding data input/output region 1102 in the second, third and fourth rows 1108, 1110, 1112 of the text entry screen 1100. Therefore, the data input/output regions 1002 in the second, third and fourth rows 1008, 1010, 1012 of the date selection screen 1000 and the corresponding data input/output regions 1102 in the second, third and fourth rows 1108, 1110, 1112 of the text entry screen 1100 each comprise common I/O regions.

Similarly, the first two data input/output regions 1102a, 1102b and the last two data input/output regions 1102d, 1102e in the fifth row 1114 of the text entry screen 1100 respectively occupy the same position as the first two data input/output regions 1002a, 1002b and the last two data input/output regions 1002f, 1002g in the fifth row 1014 of the date selection screen 1000. As a result, the first two and last two data input/output regions 1002a, 1002b, 1002f, 1002g and the corresponding data input/output regions 1102a, 1102b, 1102d, 1102e each comprise common 1/0 regions.

To ease text entry, the e-mail/memo software may maintain a dictionary/history of commonly-used words, selects from the dictionary/history words that might correspond with the entered character sequence, and causes the display management software to display the selected words on the first row 1106 of the text entry screen 1100. Therefore, the width and number of data input/output regions 1102 in the first row 1106 of the text entry screen 1100 will vary with the length and number of the words selected for display. However, the seven data input/output regions 1002 in the first row 1006 of the date selection screen 1000 together occupy the same position as the data input/output regions 1102 in the first row 1106 of the text entry screen 1100. As a result, the first row 1006 of the date selection screen 1000 and the first row 1106 of the text entry screen 1100 comprise a single common I/O region.

Similarly, since the space character is one of the most commonly-used characters in the English language, to ease text entry the space character on an English-language input device, such as keyboard, is usually larger than the other keys. Therefore, the data input/output region 1102c in the fifth row 1114 of the text entry screen 1100 that corresponds with the space character occupies the same position as the middle three data input/output regions 1002c, 1002d, 1002e in the fifth row 1014 of the date selection screen 1000. As a result, the three data input/output regions 1002c, 1002d, 1002e and the single data input/output region 1102c also comprise a single common I/O region.

The display management software may be configured to detect touch activity at one or more of the common I/O regions with a greater accuracy than the size of respective common I/O region. As a result, one or more of the common I/O regions may comprise a plurality of data input/output regions whose size and/or position is unique to the associated computer program 258 ("variable I/O regions"). For example, as discussed, the common I/O region in the first row 1006 of the date selection screen 1000 may comprise seven fixed-width data input/output regions 1002, whereas the width and number of data input/output regions 1102 in the common I/O region in the first row 1106 of the text entry screen 1100 will vary with the length and number of the words displayed in the first row 1106. Therefore, the data input/output regions 1002 in the first row 1006 of the date selection screen 1000, and the data input/output regions 1102 in the first row 1106 of the text entry screen 1100 each comprise variable I/O regions. The display management software can detect and distinguish between touch activity at each of the variable I/O regions in the first row 1006, 1106 even though each of these variable I/O regions is smaller than the common I/O region.

Similarly, the data input/output region 1102c in the fifth row 1114 of the text entry screen 1100 that corresponds with the space character has the same width, and occupies the same position as the middle three data input/output regions 1002c, 1002d, 1002e in the fifth row 1014 of the date selection screen 1000. Therefore, the middle three data input/output regions 1002c, 1002d, 1002e each comprise variable I/O regions. The display management software can detect and distinguish between touch activity at each of the variable I/O regions in the fifth row 1114 even though each of these variable I/O regions is smaller than the common I/O region 1102c.

To allow the operator of the communications device 200 to easily identify the lateral extent of each common I/O region, each data input/output region is overlayed by one of the transparent keys of the transparent lens 308 (of the display 300). Preferably, each common I/O region is overlayed by at most one of the transparent keys of the transparent lens 308 (of the display 300). Also, preferably the size and shape of each said transparent key matches the size and shape of each corresponding common I/O region. As a result, the recessed region 312 may align with the lateral extent of each common I/O region.

Further, to accommodate differences in the size/location of the variable I/O regions amongst the various data input/output screens, while still allowing the operator of the communications device 200 to easily identify the lateral extent of each data input/output region, preferably the largest variable I/O region in each row and in each column amongst all of the data input/output screens is overlayed by at most one of the transparent keys. Also, preferably the size and position of each said transparent key matches the size and shape of each corresponding largest variable I/O region. As a result, the recessed region 312 may align with the lateral extent of each variable I/O region.

If the data processor rendered all the dark-coloured grid lines of all the data input/output screens on the display device 302, computing power of the data processor would be wasted rendering grid lines as each new computer program 258 became active. To avoid having to render all of these grid lines, without obscuring the lateral extent of each data input/output region and each transparent key, the transparent lens 308 may include a coloured mask 314 that is incorporated into the recessed region 312, as shown in Figs. 3, 6 and 7. Preferably, the transparent lens 308 is injection molded using an in-mould decoration (IMD) fabrication process, and the mask 314 is printed onto the transparent lens 308 during IMD fabrication. Since the mask 314 is disposed above or separated from the display device 302, the mask 314 creates a parallax difference or apparent angular shift in the position of the recessed regions 312 as the transparent lens 308 is viewed from different angles. As a result, this configuration makes the distinction between the various data I/O regions more visually apparent than if the data processor rendered all the grid lines on the display device 302.

Fig. 6 is a top plan view of the transparent lens 308, and depicts the configuration of a sample mask 314 that is associated with the sample data input/output screens 1000, 1100. Fig. 7 is a transverse cross-sectional view of the display device 302, including the transparent lens 308. As shown, the mask 314 comprises six horizontal dark-coloured grid lines 316a, 316b, 316c, 316d, 316e, 316f, and eight vertical dark-coloured grid lines 316g, 316h, 316i, 316j, 316k, 3161, 316m, 316n.

The horizontal grid lines 316a, 316b are respectively aligned with the upper and lower limits of the common I/O regions of the first row 1006 of the date selection screen 1000 and the first row 1106 of the text entry screen 1100. The horizontal grid lines 316b, 316c are respectively aligned with the upper and lower limits of the common I/O regions of the second row 1008 of the date selection screen 1000 and the second row 1108 of the text entry screen 1100. The horizontal grid lines 316c, 316d are respectively aligned with the upper and lower limits of the common I/O regions of the third row 1010 of the date selection screen 1000 and the third row 1110 of the text entry screen 1100. The horizontal grid lines 316d, 316e are respectively aligned with the upper and lower limits of the common I/O regions of the fourth row 1012 of the date selection screen 1000 and the fourth row 1112 of the text entry screen 1100. The horizontal grid lines 316e, 316f are respectively aligned with the upper and lower limits of the common I/O regions of the fifth row 1014 of the date selection screen 1000 and the fifth row 1114 of the text entry screen 1100.

The vertical grid lines 316g, 316h are respectively aligned with left- and right-hand limits of the data input/output regions of the first column of the date selection screen 1000 and the first column of the text entry screen 1100. The vertical grid lines 316h, 316i are respectively aligned with left- and right-hand limits of the data input/output regions of the second column of the date selection screen 1000 and the second column of the text entry screen 1100. The vertical grid lines 316i, 316j are respectively aligned with left- and right-hand limits of the data input/output regions of the third column of the date selection screen 1000 and the third column of the text entry screen 1100. The vertical grid lines 316j, 316k are respectively aligned with left- and right-hand limits of the data input/output regions of the fourth column of the date selection screen 1000 and the fourth column of the text entry screen 1100. The vertical grid lines 316k, 3161 are respectively aligned with left- and right-hand limits of the data input/output regions of the fifth column of the date selection screen 1000 and the fifth column of the text entry screen 1100. The vertical grid lines 3161, 316m are respectively aligned with left- and right-hand limits of the data input/output regions of the sixth column of the date selection screen 1000 and the sixth column of the text entry screen 1100. The vertical grid lines 316m, 316n are respectively aligned with left- and right-hand limits of the data input/output regions of the seventh column of the date selection screen 1000 and the seventh column of the text entry screen 1100.

As a result, the grid lines 316 may align with the lateral extent of each common I/O region and corresponding transparent key. However, preferably none of the grid lines 316 correspond with the lateral extent of the variable I/O regions 1002 in the first row 1006 of the date selection screen 1000, or the lateral extent of the variable I/O regions 1002c, 1002d, 1002e in the fifth row 1014 of the date selection screen 1000. Therefore, the display management software may be configured such that when the calendar program is the active computer program 258, the data processor renders on the display device 302 virtual grid lines between each of the seven variable I/O regions in the first row 1006, and virtual grid lines between the each of variable I/O regions 1002c, 1002d, 1002e. In this situation, the data processor may also render, in the data input/output regions 1002, the date numbers for the month selected by the operator of the communications device 200. As a result, the image rendered on display 302, below the touch-sensitive screen 304, may match the data input/output screen 1000 shown in Fig. 4.

Similarly, preferably none of the grid lines 316 correspond with the lateral extent of the variable I/O regions 1102 in the first row 1106 of the text entry screen 1100. Therefore, the display management software may be configured such that when the e-mail software or the memo software is the active computer program 258, the data processor renders on the display device 302 virtual grid lines between each of the variable I/O regions 1102 in the first row 1106 of the text entry screen 1100. In this situation, the data processor may also render, in the common I/O and/or the variable I/O regions 1102, the characters of a standard QWERTY keyboard. The e-mail/memo software also receives text input from the touch-sensitive screen 304, via the display management software, and may cause the data processor to render, in the variable I/O regions 1102, the words associated with the entered character sequence. As a result, the image rendered on display device 302, below the touch-sensitive screen 304, may match the data input/output screen 1100 shown in Fig. 5.

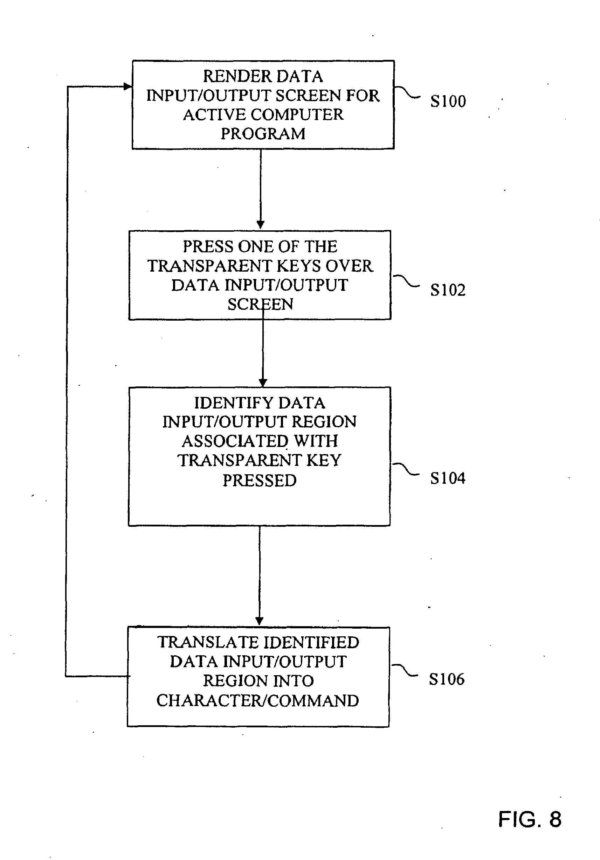

Fig. 8 is a flow chart that depicts the method of operation of the display 300 and data processing system when the operator of the communication device 200 selects one of the computer programs 258 as the active computer program.

At step S 100, the display management software renders on the display device 302 the data input/output screen that is associated with the active computer program. The data input/output screen comprises a plurality of data input regions. Each data input region is overlayed by one of the transparent keys. As discussed above, one or more of the data input regions may comprise common I/O regions that are common amongst all of the computer programs 258.

The display management software is configured such that each common I/O region is aligned with a respective transparent key. Preferably, the lateral extent of each common I/O region is identified by a permanent grid line that is formed in the three-dimensional touch-sensitive screen 304 in the recessed region around each associated transparent key. As a result, the grid lines visually separate the common I/O regions from each other.

One or more of the data input regions may comprise variable I/O regions whose size and/or position is unique to the active computer program. Where a common I/O region comprises a plurality of variable I/O regions, the display management software renders on the display device 302 one or more virtual grid lines that visually separate these variable I/O regions.

As a result, each common I/O region in the active data input/output screen is overlayed by a transparent key, and is optionally surrounded by grid lines that are formed in the three-dimensional touch-sensitive screen 304. Further, the each variable I/O region in the active data input/output screen is surrounded by virtual grid lines that are rendered on the display 302. Therefore, the operator can readily ascertain the lateral extent of each data input/output region.

At step S100, the active computer program also renders on the display device 302 characters appropriate to the active computer program. As a result, the data input/output screen visually associates characters/commands with specified data input/output regions. For instance, where the calendar software is the active computer program, the computer program renders in numerical order, in the appropriate data input/output regions, the date numbers for the month selected by the operator of the communications device 200. Where the e-mail/memo software is the active computer program, the computer program renders, in the appropriate data input/output regions, the characters of a standard QWERTY keyboard.

Thereafter, at step S102, the user inputs characters/commands into the active computer program by pressing or touching the portion of the transparent key that overlays the data input/output region that is associated with the desired character/command. The display management software detects the touch activity (change in pressure or capacitance) at the transparent touch-sensitive panel as a touch input, and identifies the particular data input/output region that is associated with the location of the touch input, at step S104. The display management software then passes the identity of the selected data input/output region to the active computer program which, in turn, translates the touch input into the character/command that is visually associated with the selected data input/output region, at step S106.

The process repeats as long as the communications device 200 is powered on. Therefore, if the operator of the communication device 200 subsequently selects a different one of the computer programs 258 as the active computer program, the display management software renders on the display device 302 the data input/output screen that is associated with the new active computer program. Again, each common I/O region is aligned with a respective transparent key, and the lateral extent of each common I/O region is identified by a grid line that is formed around each associated transparent key. The display management software may also render on the display device 302 one or more virtual delimiters that visually separate any variable I/O regions of the active data input/output region. The new active computer program then renders on the display device 302 characters appropriate to the active computer program. However, since the lateral extent of the common I/O regions are identified by grid lines that are permanently formed around each associated transparent key, the display management software need not render grid lines around each data input/output region. Instead, the display management software need not render grid lines around each variable I/O region. As a result, the rendering power required to render the different data input/output screens can be reduced in contrast to conventional touch-screen devices.

## Claims

1. A touch-sensitive display (300) comprising:
a capacitive touch-sensitive panel (306);
a display (302) disposed below the capacitive touch-sensitive panel (306) ;
a transparent overlay (308) integrally molded with the capacitive touch-sensitive panel (306) and comprising:
a plurality of raised regions (310) overlaying the plurality of data input regions,
a recessed region (312) surrounding the raised regions (310),
a mask (314) comprising a visual delimiter incorporated into the recessed region (312);
wherein at least one virtual delimiter is rendered on the display (302) below one of the plurality of raised regions (310) and separates at least two data input regions.

2. A touch-sensitive display according to Claim 1, wherein the mask (314) is printed onto the recessed region (312).

3. A touch-sensitive display according to Claim 1, wherein the mask (314) is disposed separately from the display (302).

4. The touch-sensitive display according to any one of Claims 1 to 3, wherein the mask is incorporated using an in-mould decoration fabrication process.

5. The touch-sensitive display according to any of the preceding claims, wherein the display comprises a plurality of virtual delimiters rendered on the display (302) below one of the plurality of raised regions (310).

6. The touch-sensitive display according to Claim 5, wherein the virtual delimiter rendered on the display (302) below one of the plurality of raised regions aligns with a recessed region (312).

7. A portable electronics device comprising:
the touch-sensitive display (300) according to any of Claims 1 to 6;
a processor (238) operably coupled to the touch-sensitive display (300), the processor (238) configured to:
render on the display (302) the plurality of data input regions and the at least one virtual delimiter separating the plurality of data input regions; and
detect touch activity associated with one of the raised regions (310) overlaying one of the plurality of data input regions.

8. The portable electronics device according to Claim 7, wherein the visual delimiter is disposed between the data input regions.

9. The portable electronics device according to Claim 7, wherein a common data input region comprises a plurality of the data input regions, and wherein the virtual delimiter separates the data input regions of the common data input region.

10. A method of detecting input from a touch-sensitive display, the method comprising:
rendering on a capacitive touch-sensitive display (300) a plurality of data input regions, wherein a transparent overlay including a plurality of raised regions (310) overlies the plurality of data input regions and a recessed region (312) surrounds the raised regions (310) and includes a mask (314) comprising a visual delimiter incorporated into the recessed region (312);
detecting touch activity associated with one of the plurality of raised regions (310) overlaying one of the plurality of data input regions, wherein at least one virtual delimiter is rendered on the display (302) below one of the plurality of raised regions (310) and separates at least two data input regions.

11. The method according to Claim 10, wherein the virtual delimiter separates the data input regions of a common data input region.

12. The method according to any of Claims 10 and 11, wherein the at least one virtual delimiter is aligned with the visual delimiter.

13. A method according to Claim 10, wherein the mask (314) is printed onto the recessed region (312).

14. A method according to Claim 10, wherein the mask (314) is disposed separately from the display (302).

## Patentansprüche

1. Berührungsempfindliche Anzeige (300), die aufweist:
eine kapazitive berührungsempfindliche Frontplatte (306);
eine Anzeige (302), die unter der kapazitiven berührungsempfindlichen Frontplatte (306) angeordnet ist;
eine transparente Auflage (308), die integral mit der kapazitiven berührungsempfindlichen Frontplatte (306) geformt ist und aufweist:
eine Vielzahl von erhabenen Bereichen (310), die über der Vielzahl von Dateneingabebereichen liegen,
einen vertieften Bereich (312), der die erhabenen Bereiche (310) umgibt,
eine Maske (314), die einen visuellen Delimiter aufweist, der in dem vertieften Bereich (312) aufgenommen ist;
wobei zumindest ein virtueller Delimiter auf der Anzeige (302) unter einem der Vielzahl von erhabenen Bereichen (310) dargestellt wird und zumindest zwei Dateneingabebereiche trennt.

2. Berührungsempfindliche Anzeige gemäß Anspruch 1, wobei die Maske (314) auf den vertieften Bereich (312) gedruckt ist.

3. Berührungsempfindliche Anzeige gemäß Anspruch 1, wobei die Maske (314) getrennt von der Anzeige (302) angeordnet ist.

4. Berührungsempfindliche Anzeige gemäß einem der Ansprüche 1 bis 3, wobei die Maske unter Verwendung eines In-Mould-Decoration-Herstellungsprozesses aufgenommen wird.

5. Berührungsempfindliche Anzeige gemäß einem der vorhergehenden Ansprüche, wobei die Anzeige eine Vielzahl von virtuellen Delimitern aufweist, die auf der Anzeige (302) unter einem der Vielzahl von erhabenen Bereichen (310) dargestellt werden.

6. Berührungsempfindliche Anzeige gemäß Anspruch 5, wobei der virtuelle Delimiter, der auf der Anzeige (302) unter einem der Vielzahl von erhabenen Bereichen dargestellt wird, mit einem vertieften Bereich (312) ausgerichtet ist.

7. Tragbare elektronische Vorrichtung, die aufweist:
die berührungsempfindliche Anzeige (300) gemäß einem der Ansprüche 1 bis 6;
einen Prozessor (238), der betriebsfähig mit der berührungsempfindlichen Anzeige (300) gekoppelt ist, wobei der Prozessor (238) konfiguriert ist zum:
Darstellen auf der Anzeige (302) der Vielzahl von Dateneingabebereichen und des zumindest einen virtuellen Delimiters, der die Vielzahl von Dateneingabebereichen trennt; und
Erfassen einer Berührungsaktivität, die mit einem der erhabenen Bereiche (310) assoziiert ist, der über einem der Vielzahl von Dateneingabebereichen liegt.

8. Tragbare elektronische Vorrichtung gemäß Anspruch 7, wobei der visuelle Delimiter zwischen den Dateneingabebereichen angeordnet ist.

9. Tragbare elektronische Vorrichtung gemäß Anspruch 7, wobei ein gemeinsamer Dateneingabebereich eine Vielzahl der Dateneingabebereichen aufweist, und wobei der virtuelle Delimiter die Dateneingabebereiche des gemeinsamen Dateneingabebereichs trennt.

10. Verfahren zum Erfassen einer Eingabe von einer berührungsempfindlichen Anzeige, wobei das Verfahren aufweist:
Darstellen, auf einer kapazitiven berührungsempfindlichen Anzeige (300), einer Vielzahl von Dateneingabebereichen, wobei eine transparente Auflage mit einer Vielzahl von erhabenen Bereichen (310) über der Vielzahl von Dateneingabebereichen liegt und ein vertiefter Bereich (312) die erhabenen Bereiche (310) umgibt und eine Maske (314) umfasst, die einen visuellen Delimiter aufgenommen in dem vertieften Bereich (312) aufweist;
Erfassen einer Berührungsaktivität, die mit einem der Vielzahl von erhabenen Bereichen (310) assoziiert ist, der über einem der Vielzahl von Dateneingabebereichen liegt, wobei zumindest ein virtueller Delimiter auf der Anzeige (302) unter einem der Vielzahl von erhabenen Bereichen (310) dargestellt wird und zumindest zwei Dateneingabebereiche trennt.

11. Verfahren gemäß Anspruch 10, wobei der virtuelle Delimiter die Dateneingabebereiche eines gemeinsamen Dateneingabebereichs trennt.

12. Verfahren gemäß einem der Ansprüche 10 und 11, wobei der zumindest eine virtuelle Delimiter mit dem visuellen Delimiter ausgerichtet ist.

13. Verfahren gemäß Anspruch 10, wobei die Maske (314) auf den vertieften Bereich (312) gedruckt ist.

14. Verfahren gemäß Anspruch 10, wobei die Maske (314) getrennt von der Anzeige (302) angeordnet ist.

## Revendications

1. Écran tactile (300) comprenant :
un panneau tactile capacitif (306) ;
un écran (302) disposée sous le panneau tactile capacitif (306) ;
un capot transparent (308) moulé d'un seul tenant avec le panneau tactile capacitif (306) et comprenant :
une pluralité de régions en saillie (310) recouvrant une pluralité de régions d'entrée de données ;
une région en creux (312) entourant les régions en saillie (310) ;
un masque (314) comprenant un délimiteur visuel incorporé dans la région en creux (312),
dans lequel au moins un délimiteur virtuel est restitué sur l'écran (302) sous l'une de la pluralité de régions en saillie (310) et sépare au moins deux régions d'entrée de données.

2. Écran tactile selon la revendication 1, dans lequel le masque (314) est imprimé sur la région en creux (312).

3. Écran tactile selon la revendication 1, dans lequel le masque (314) est disposé séparément de l'écran (302).

4. Écran tactile selon l'une quelconque des revendications 1 à 3, dans lequel le masque est incorporé en utilisant un procédé de fabrication de décoration dans le moule.

5. Écran tactile selon l'une quelconque des revendications précédentes, dans lequel l'écran comprend une pluralité de délimiteurs virtuels restitués sur l'écran (302) sous l'une de la pluralité de régions en saillie (310).

6. Écran tactile selon la revendication 5, dans lequel le délimiteur virtuel restitué sur l'écran (302) sous l'une de la pluralité de régions en saillie s'aligne avec une région en creux (312).

7. Dispositif électronique portatif comprenant :
l'écran tactile (300) selon l'une quelconque des revendications 1 à 6 ;
un processeur (238) associé fonctionnellement à l'écran tactile (300), le processeur (238) étant configuré pour :
restituer sur l'écran (302) la pluralité de régions d'entrée de données et l'au moins un délimiteur virtuel séparant la pluralité de régions d'entrée de données ; et
détecter une action de toucher associée à l'une des régions en saillie (310) recouvrant l'une de la pluralité de régions d'entrée de données.

8. Dispositif électronique portatif selon la revendication 7, dans lequel le délimiteur visuel est disposé entre les régions d'entrée de données.

9. Dispositif électronique portatif selon la revendication 7, dans lequel une région commune d'entrée de données comprend une pluralité de régions d'entrée de données, et dans lequel le délimiteur virtuel sépare les régions d'entrée de données de la région commune d'entrée de données.

10. Procédé de détection d'entrée à partir d'un écran tactile, le procédé comprenant :
la restitution sur un écran tactile capacitif (300) d'une pluralité de régions d'entrée de données, dans lequel un capot transparent incluant une pluralité de régions en saillie (310) recouvre la pluralité de régions d'entrée de données et une région en creux (312) entoure les régions en saillie (310) et inclut un masque (314) comprenant un délimiteur visuel incorporé dans la région en creux (312) ;
la détection d'une action de toucher associée à l'une de la pluralité de régions en saillie (310) recouvrant l'une de la pluralité de régions d'entrée de données, dans lequel au moins un délimiteur virtuel est restitué sur l'écran (302) sous l'une de la pluralité de régions en saillie (310) et sépare au moins deux régions d'entrée de données.

11. Procédé selon la revendication 10, dans lequel le délimiteur virtuel sépare des régions d'entrée de données d'une région commune d'entrée de données.

12. Procédé selon l'une quelconque des revendications 10 et 11, dans lequel l'au moins un délimiteur virtuel est aligné avec le délimiteur visuel.

13. Procédé selon la revendication 10, dans lequel le masque (314) est imprimé sur la région en creux (312).

14. Procédé selon la revendication 10, dans lequel le masque (314) est disposé séparément de l'écran (302).
